# EUROPEAN PATENT SPECIFICATION

(11) **EP 3 680 845 B1**
(45) Date of publication and mention of the grant of the patent: **03.06.2026**
(21) Application number: 17924226.8
(22) Date of filing: 05.09.2017
(51) Int. Cl.: G06Q 30/06, G06N 20/00

(54) **ESTIMATION SYSTEM, ESTIMATION METHOD, AND PROGRAM**
SCHÄTZSYSTEM, SCHÄTZVERFAHREN UND PROGRAMM
SYSTÈME D'ESTIMATION, PROCÉDÉ D'ESTIMATION ET PROGRAMME

(43) Date of publication of application: 15.07.2020
(73) Proprietor: Rakuten Group, Inc., Setagaya-ku Tokyo 158-0094 (JP)
(72) Inventor: TOMODA Kyosuke, Tokyo 158-0094 (JP)
(74) Representative: EIP
(86) International application number: PCT/JP2017/031987
(87) International publication number: WO 2019/049210

(56) References cited:
- WO-A1-02/27610
- CA-A1- 2 426 168
- JP-A- 2000 181 894
- JP-A- 2005 309 712
- JP-A- H0 922 402
- US-A1- 2011 047 044
- US-A1- 2017 140 382
- US-B1- 9 600 764
- US-B2- 8 458 069

## Description

### Technical Field

The present invention relates to an estimating system, an estimating method, and a program.

### Background Art

In Patent Literature 1, there is described a configuration in which, in the calculation of a score value of a determination relating to fraudulent use of a credit card and the like, not only items included in received authorization data but also items included in history data of each user are used to integrate the score.

In Patent Literature 2, there is described a configuration in which an occurrence probability is determined by classifying various cases based on, for example, a time and a shop at which a credit card is used and an amount of money used by the credit card, and calculating the probability of fraudulent use from past authorization data for each case. Further, in Patent Literature 2, there is a description that collection of a large amount of authorization data enables reliability of an occurrence probability to be improved. Patent Literature 3 relates to evaluating fraud risk in an electronic commerce transaction. Patent Literature 4 relates to adaptive identification of sources of fraud. Patent Literature 5 relates to score based decisioning. Patent Literature 6 relates to evaluating fraud risk in an electronic commerce transaction. Patent Literature 7 relates to identifying fraudulent transactions.

### Citation List

### Patent Literature

[Patent Literature 1] JP 2007-207011 A
[Patent Literature 2] JP 2004-334526 A
[Patent Literature 3] US 2011/047044 A1
[Patent Literature 4] US 8 458 069 B2
[Patent Literature 5] WO 02/27610 A1
[Patent Literature 6] CA 2 426 168 A1
[Patent Literature 7] US 2017/140382 A1

### Summary of Invention

### Technical Problem

The inventors of the present invention have considered a system configured to use a machine learning model to determine a score value to be used to estimate a possibility that an order transmitted to an electronic commerce system is a fraudulent order. In the system, for example, as the determined score value becomes larger, the possibility that the order is a fraud is estimated to be higher.

In such a system, in order to reflect the latest trends in fraudulent use, it is desired that the machine learning model be updated in real time. However, a machine learning model may not always be updated in real time. For example, when it is required to manually input training data, or when learning data is learned by a machine learning model after being manually confirmed, the machine learning model is inevitably not updated in real time.

When there is a time lag between the learning of the machine learning model and the estimation using the machine learning model as in this case, an order that is actually a fraudulent order may be estimated as not being a fraudulent order, or an order that is not a fraudulent order may be estimated as being a fraudulent order. For example, an attribute of an order that has a low possibility of being a fraudulent order during learning may have a highpossibility of being a fraudulent order during estimation when the situation changes.

As another example, when a machine learning model that has learned orders from a certain region is used to estimate the possibility that orders from another region are fraudulent orders, the tendency of orders having a high possibility of being a fraudulent order and the meaning represented by the same score value may be different from region to region.

However, even when the technologies described in Patent Literature 1 and Patent Literature 2 are used, it is not possible to adapt to differences between a situation during learning of a machine learning model and a situation during estimation using the machine learning model, such as the differences described above.

The matters described above are not limited to the estimation of the possibility that an order is a fraudulent order, and are generally applicable to cases in which estimation is performed through use of a machine learning model.

The present invention has been made in view of the problems described above. It is an object of the present invention to provide an estimating system, an estimating method, and a program, which are capable of adapting to differences between a situation during learning of a machine learning model and a situation during estimation using the machine learning model.

### Solution to Problem

In order to solve the problem described above, according to one embodiment of the present invention, there is provided an estimating system according to claim 1.

Further, according to one embodiment of the present invention, there is provided a computer implemented estimating method according to claim 4.

Further, according to one embodiment of the present invention, there is provided a computer readable storage medium according to claim 5.

### Brief Description of Drawings

FIG. 1 is a diagram for illustrating an example of an overall configuration of a fraudulent order determination system according to an embodiment of the present invention.
FIG. 2 is a diagram for illustrating an example of operations according to an embodiment of the present invention.
FIG. 3 is a table for showing an example of order data.
FIG. 4 is a table for showing an example of learning data.
FIG. 5 is a table for showing an example of evaluation data.
FIG. 6 is a table for showing an example of estimation result data.
FIG. 7 is a table for showing an example of result management data.
FIG. 8 is a diagram for illustrating an example of a fraudulent order confirmation screen.
FIG. 9 is a table for showing an example of learning data.
FIG. 10A is a functional block diagram for illustrating an example of functions to be implemented by a fraudulent order determination device according to an embodiment of the present invention.
FIG. 10B is a functional block diagram for illustrating an example of functions to be implemented by a score value determination device according to an embodiment of the present invention.
FIG. 10C is a functional block diagram for illustrating an example of functions to be implemented by an evaluation data generation device according to an embodiment of the present invention.
FIG. 11A is a flowchart for illustrating an example of a flow of processing to be performed by the fraudulent order determination system according to an embodiment of the present invention.
FIG. 11B is a flowchart for illustrating an example of a flow of processing to be performed by the fraudulent order determination system according to an embodiment of the present invention.
FIG. 11C is a flowchart for illustrating an example of a flow of processing to be performed by the fraudulent order determination system according to an embodiment of the present invention.
FIG. 12 is a flowchart for illustrating an example of a flow of processing to be performed by the fraudulent order determination device according to an embodiment of the present invention.

### Description of Embodiments

Now, an embodiment of the present invention is described with reference to the drawings.

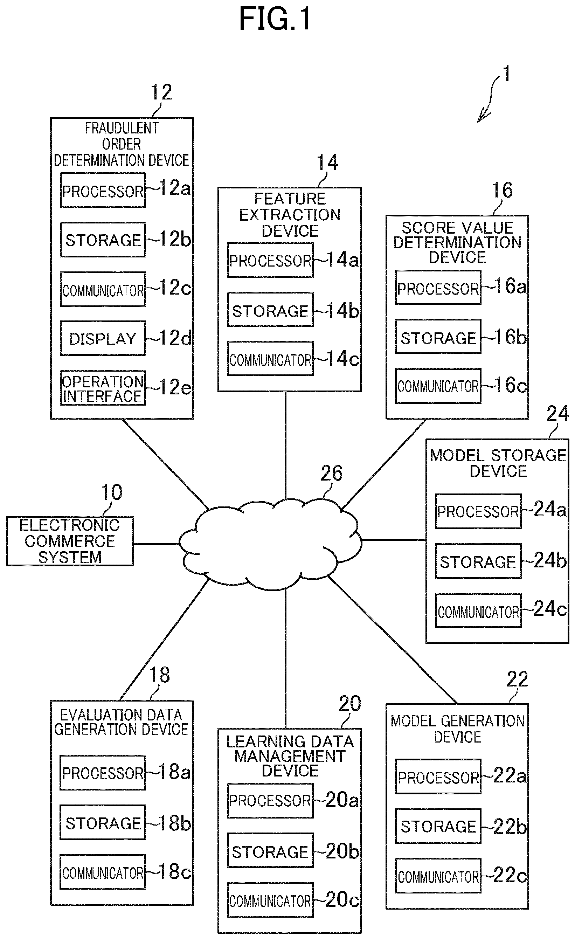

FIG. 1 is a diagram for illustrating an example of an overall configuration of a fraudulent order determination system 1 according to an embodiment of the present invention. As illustrated in FIG. 1, the fraudulent order determination system 1 of this embodiment includes an electronic commerce system 10, a fraudulent order determination device 12, a feature extraction device 14, a score value determination device 16, an evaluation data generation device 18, a learning data management device 20, a model generation device 22, and a model storage device 24. Those devices and the system are connected to a computer network 26, for example, the Internet, and can communicate to and from each other.

In this embodiment, the electronic commerce system 10 is, for example, a computer system configured to process requests for ordering, shipping, payment, and the like of products and services from users.

In this embodiment, the fraudulent order determination device 12 is, for example, a computer configured to determine whether or not an order for a product or service transmitted to the electronic commerce system 10 is a fraudulent order. The fraudulent order determination device 12 of this embodiment is also configured to generate estimation result data indicating a degree of possibility that an order is a fraudulent order. The fraudulent order determination device 12 of this embodiment includes a processor 12a, a storage 12b, a communicator 12c, a display 12d, and an operation interface 12e.

In this embodiment, the feature extraction device 14 is, for example, a computer configured to extract a feature associated with an order for a product or service transmitted to the electronic commerce system 10. The feature extraction device 14 of this embodiment includes a processor 14a, a storage 14b, and a communicator 14c.

In this embodiment, the score value determination device 16 is, for example, a computer configured to determine a score value associated with the possibility that an order for a product or service transmitted to the electronic commerce system 10 is a fraudulent order. The score value determination device 16 of this embodiment includes a processor 16a, a storage 16b, and a communicator 16c.

In this embodiment, the evaluation data generation device 18 is, for example, a computer configured to generate evaluation data to be used by the fraudulent order determination device 12 to generate estimation result data. The evaluation data generation device 18 of this embodiment includes a processor 18a, a storage 18b, and a communicator 18c.

In this embodiment, the learning data management device 20 is, for example, a computer configured to manage learning data to be used in the learning of a machine learning model generated by the model generation device 22. The learning data management device 20 of this embodiment includes a processor 20a, a storage 20b, and a communicator 20c.

In this embodiment, the model generation device 22 is, for example, a computer configured to execute learning of a machine learning model using learning data managed by the learning data management device 20. A machine learning model (learned model), based on which learning using learning data has been executed, is stored in the model storage device 24. The model generation device 22 of this embodiment includes a processor 22a, a storage 22b, and a communicator 22c.

The machine learning model in this embodiment is implemented based on, for example, a random forest . Implementation of the machine learning model in this embodiment is not particularly limited, and the machine learning model may also be implemented based on an algorithm other than a random forest.

In this embodiment, the model storage device 24 is, for example, a computer configured to store a learned model generated by the model generation device 22. The score value determination device 16 acquires a learned model stored in the model storage device 24, and determines a score value by using the acquired learned model. The model storage device 24 of this embodiment includes a processor 24a, a storage 24b, and a communicator 24c.

The processors 12a, 14a, 16a, 18a, 20a, 22a, and 24a are program control devices, for example, a central processing unit (CPU). The processors 12a, 14a, 16a, 18a, 20a, 22a, and 24a operate in accordance with a program installed in the fraudulent order determination device 12, the feature extraction device 14, the score value determination device 16, the evaluation data generation device 18, the learning data management device 20, the model generation device 22, and the model storage device 24, respectively.

The storages 12b, 14b, 16b, 18b, 20b, 22b, and 24b are each, for example, a storage element such as a read-only memory (ROM) or a random-access memory (RAM), or a hard disk drive.

The communicators 12c, 14c, 16c, 18c, 20c, 22c, and 24c are each, for example, a communication interface such as a network board or a wireless local area network (LAN) module.

The display 12d is, for example, a display such as a liquid crystal display or an organic EL display.

The operation interface 12e is, for example, a user interface, such as a mouse, a keyboard, a touch pad, and the like for outputting to the processor 12a input data corresponding to an operation input.

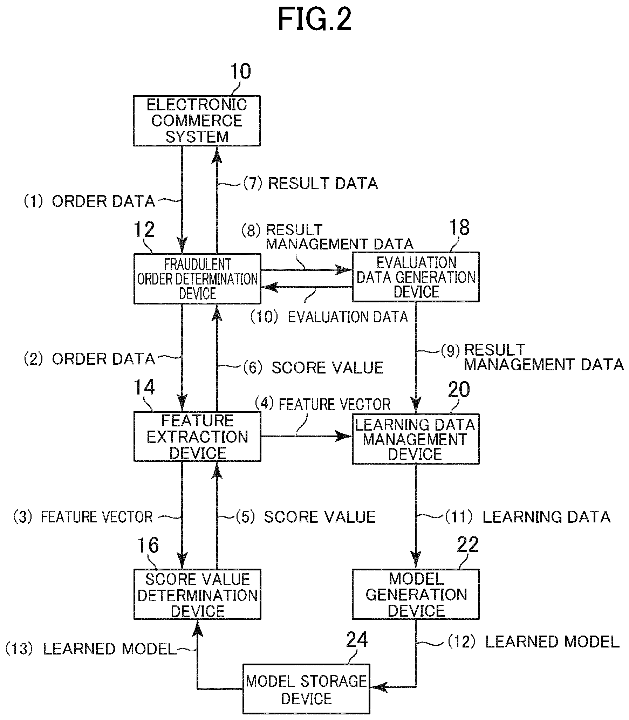

There is now described an example of operations in this embodiment with reference to FIG. 2.

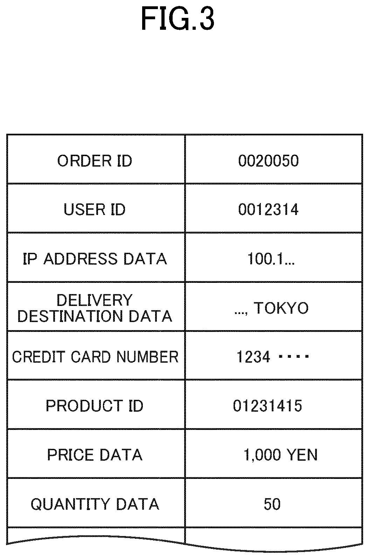

In this embodiment, for example, when an order to be transmitted to the electronic commerce system 10 is generated, order data like that shown in FIG. 3 is transmitted from the electronic commerce system 10 to the fraudulent order determination device 12 (refer to Step (1) of FIG. 2).

The order data is, for example, data indicating an order for a product or service to be transmitted to the electronic commerce system 10. As shown in FIG. 3, the order data includes an order ID, a user ID, IP address data, delivery destination data, a credit card number, a product ID, price data, quantity data, and the like.

The order ID is, for example, identification information on the order indicated by the order data. The user ID is, for example, identification information on the user of the electronic commerce system 10 who performed the order indicated by the order data. The IP address data is, for example, data indicating an IP address of a terminal used by the user to perform the order. The delivery destination data is data indicating, for example, the address of the delivery destination of the ordered product or service. The credit card number data is, for example, data indicating a credit card number used to settle the order. The product ID is, for example, identification information on the ordered product or service. The price data is, for example, data indicating the price of the ordered product or service. The quantity data is, for example, data indicating the quantity of the ordered product or service.

There is now described determination of whether or not an order associated with order data having the order ID 0020050 shown in FIG. 3 is a fraudulent order, and estimation of the possibility that the order is a fraudulent order. In the following description, the order data having the order ID 0020050 shown in FIG. 3 is referred to as "target order data".

The fraudulent order determination device 12 transmits the target order data to the feature extraction device 14 (refer to Step (2) of FIG. 2).

The feature extraction device 14 generates, based on, for example, the target order data and past order data stored in the feature extraction device 14, a feature vector representing a feature associated with the target order data. Data representing a comparison result between a value of a predetermined attribute extracted from the target order data and the value of that attribute in the past order data stored in the feature extraction device 14 may be generated. In this case, from among the past order data stored in the feature extraction device 14, order data having the same user ID as that of the target order data may be identified. Then, data representing the comparison result between the value of the predetermined attribute extracted from the target order data and the value of the attribute in the identified order data may be generated. The feature vector associated with the target order data may also be generated based on the value of the target order data and data representing the comparison result.

The feature vector associated with the target order data, which is associated with the order ID included in the target order data, is transmitted from the feature extraction device 14 to the score value determination device 16 (refer to Step (3) of FIG. 2). The feature vector is also transmitted from the feature extraction device 14 to the learning data management device 20 (refer to Step (4) of FIG. 2). The transmission of the feature vector from the feature extraction device 14 to the learning data management device 20 may be performed asynchronously with the transmission of the feature vector to the score value determination device 16.

Then, the score value determination device 16 determines, based on an output produced when the feature vector received from the feature extraction device 14 is input to the learned model, the score value associated with the feature vector, that is, the score value associated with the target order data. For example, a larger score value may be determined for an order that has a higher possibility of being a fraudulent order. The score value to be determined may also be a real number. The learned model may also output the score value itself.

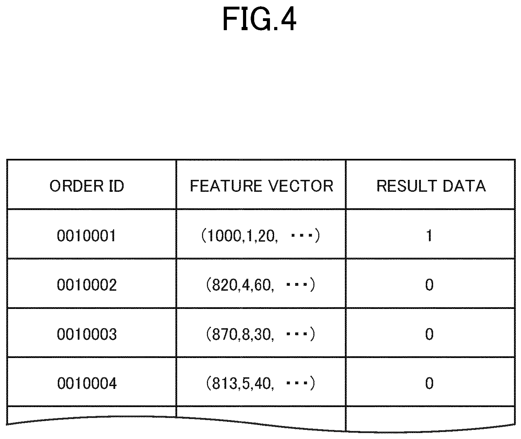

FIG. 4 is a table for showing an example of learning data. The learned model to which the feature vector associated with target order data is input has learned the learning data shown in FIG. 4. As shown in FIG. 4, the learning data includes, for example, an order ID, a feature vector, and result data.

As the order ID included in the learning data, for example, the order ID of the order data is set. As the feature vector included in the learning data, a feature vector generated based on that order data is set. The result data included in the learning data is data indicating the determination result as to whether or not the order associated with the order data is a fraudulent order. In this embodiment, for example, 1 is set as the result data value for an order determined to be a fraudulent order, and 0 is set as the result data value for an order determined not to be a fraudulent order. As described later, in this embodiment, the result data value is determined by the fraudulent order determination device 12 or is set by the operator of the fraudulent order determination device 12.

It is not required for all elements included in the learning data shown in FIG. 4 to be used for the learning by the machine learning model. For example, supervised learning may be executed in which the feature vector included in the learning data is used as input data and the result data included in the learning data is used as training data. In this case, the order ID is not used for the learning by the machine learning model.

The score value determination device 16 transmits the score value associated with the target order data, which is associated with the order ID included in the target order data, to the feature extraction device 14 (refer to Step (5) of FIG. 2).

The feature extraction device 14 transmits the score value received from the score value determination device 16 and associated with the order ID included in the target order data to the fraudulent order determination device 12 (refer to Step (6) of FIG. 2). The range of score value determined by the score value determination device 16 may be from 0 or more to 1 or less. The feature extraction device 14 may also multiply the score value by 1000 and transmit the multiplied score value to the fraudulent order determination device 12. In this case, the score value received by the fraudulent order determination device 12 is from 0 or more to 1,000 or less.

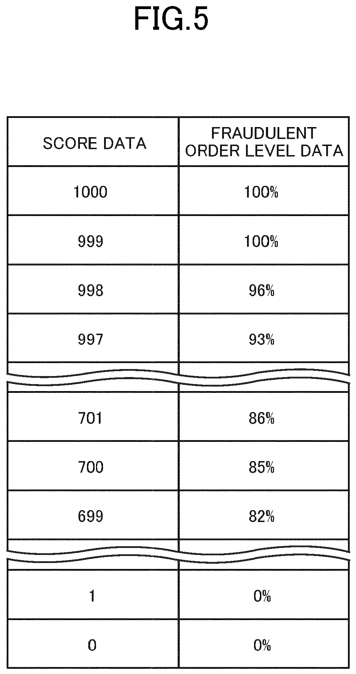

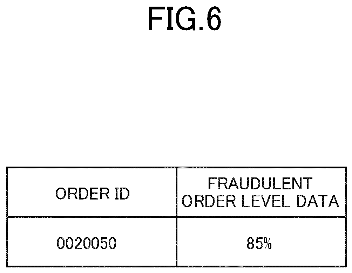

The fraudulent order determination device 12 generates the estimation result data associated with the target order data shown in FIG. 6 based on the received score value and the evaluation data generated by the evaluation data generation device 18 shown in FIG. 5.

FIG. 5 is a table for showing an example of the evaluation data generated by the evaluation data generation device 18. The evaluation data shown in FIG. 5 includes score data and fraudulent order level data. The score data included in the evaluation data is, for example, data indicating a score value. The fraudulent order level data included in the evaluation data is, for example, data indicating the degree of possibility that the order associated with the order data of that score value is a fraudulent order. The values of the fraudulent order level data shown in FIG. 5 are expressed as a percentage. Each piece of the evaluation data shown in FIG. 5 is associated with its corresponding score value.

In this embodiment, the evaluation data shown in FIG. 5 is stored in the fraudulent order determination device 12. The fraudulent order determination device 12 generates the estimation result data based on the score value determined for the order data and the evaluation data stored by the fraudulent order determination device 12.

The estimation result data shown in FIG. 6 includes, for example, an order ID and fraudulent order level data. For example, it is assumed that the score value associated with the target order data having the order ID 0020050 is 700. In this case, the value of the fraudulent order level data associated with the score data having a value of 700 in the evaluation data shown in FIG. 5 is 85%. Therefore, in such a case, 85% is set as the value of fraudulent order level data included in the estimation result data in which 0020050 is set as the order ID. In this way, in this embodiment, the degree of the possibility that the order associated with the target order data is a fraudulent order is estimated.

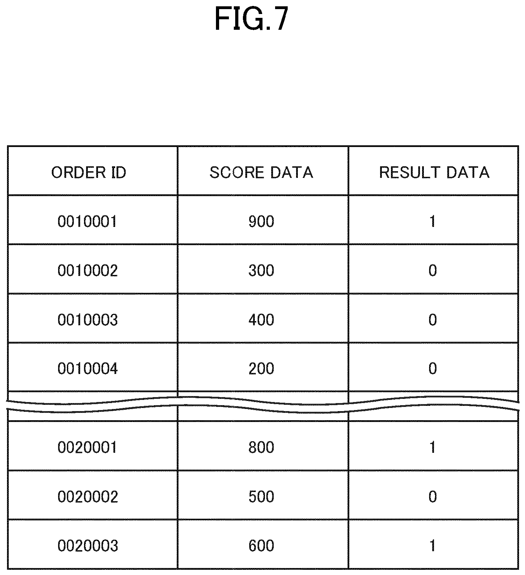

In this embodiment, for example, the value of the fraudulent order level data associated with the score data in the evaluation data shown in FIG. 5 is determined by the evaluation data generation device 18 based on result management data shown in FIG. 7. As shown in FIG. 7, the result management data includes, for example, an order ID, score data, and result data.

In this embodiment, for example, the result management data associated with the order data is generated by the fraudulent order determination device 12. The order ID of the order data is set as the order ID included in the result management data. As the value of the score data included in the result management data, the score value associated with the order data is set. As the value of the result data included in the result management data, a value indicating the determination result as to whether or not the order associated with the order data is a fraudulent order is set. In this embodiment, for example, the value of the result data included in learning data including a certain order ID is the same as the value of the result data included in the result management data including the order ID.

In FIG. 7, there are shown result management data associated with learning data that the learned model has already learned, and result management data associated with learning data that the learned model has not learned yet. Specifically, for example, the result management data having an order ID of 0020001 or later are associated with learning data that has not yet been learned.

The evaluation data generation device 18 calculates, for example, a value by dividing the number of pieces of result management data in which the value of the score data is a specific score value (e.g., 700) and the value of the result data is 1 by the total number of pieces of result management data in which the value of the score data is that score value (e.g., 700). Then, the calculated value is expressed as a percentage, and that percentage value is set as the value of the fraudulent order level data associated with the score value in the evaluation data.

The calculation method of the value of the fraudulent order level data is not limited to the above-mentionedmethod. For example, the evaluation data generation device 18 may calculate the value by dividing the number of pieces of result management data in which the value of the score data is a specific score value (e.g., 700) or more and the value of the result data is 1 by the total number of pieces of result management data in which the value of the score data is that score value (e.g., 700) or more. Further, for example, the evaluation data generation device 18 may calculate the value by dividing the number of pieces of result management data in which the value of the score data is a specific score value (e.g., 700) or less and the value of the result data is 1 by the total number of pieces of result management data in which the value of the score data is that score value (e.g., 700) or less. Then, the calculated value may be set as the value of the fraudulent order level data associated with the score value in the evaluation data.

As described above, the result management data shown in FIG. 7 includes result management data associated with learning data that the learned model to be used to determine the score value has already learned and result management data associated with learning data that the learned model has not learned yet. Therefore, in this embodiment, in the calculation of the value of the fraudulent order level data, consideration is given to the value of result data associated with the learning data that has not yet been learned in the learned model.

The value of the fraudulent order level data may be calculated based only on result management data associated with learning data that has not yet been learned. The value of the fraudulent order level data may also be calculated based on result management data associated with learning data that has not yet been learned as well as result management data associated with learning data that has been learned.

The fraudulent order determination device 12 determines whether or not the target order data is a fraudulent order. In this embodiment, for example, as described below, the determination as to whether the order associated with the target order data is a fraudulent order is executed based on a three-step determination, that is, a list determination, a rule determination, and a level determination. In this embodiment, for example, the result data associated with the target order data is generated based on the result of the determination.

In this embodiment, for example, it is first determined whether or not the value (e.g., user ID) of an attribute of the target order data is included in a white list or a black list stored in the fraudulent order determination device 12 (list determination). The white list is, for example, a list of values of the attributes of the order data that have been determined to be orders that are not fraudulent. The black list is, for example, a list of values of the attributes of the order data that have been determined to be orders that are fraudulent. When the value of an attribute is determined to be included on the white list, result data, in which 0 is set as a value, associated with the target order data is generated. Moreover, when the value of an attribute is determined to be included on the black list, result data, in which 1 is set as a value, associated with the target order data is generated.

When it is determined that the attribute value (e.g., user ID) of the target order data is not included on the white list or the black list, it is then determined whether or not the target order data conforms to a rule relating to fraudulent orders determined in advance (rule determination). For example, when it is identified that orders from 100 or more different IP addresses have been generated from the same user within one hour, result data, in which 1 is set as a value, associated with the target order data may be generated.

In the rule determination, there may be a case in which the value of the result data associated with the target order data is not determined. In such a case, determination is performed based on the value of the fraudulent order level data included in the estimation result data associated with the target order data (level determination).

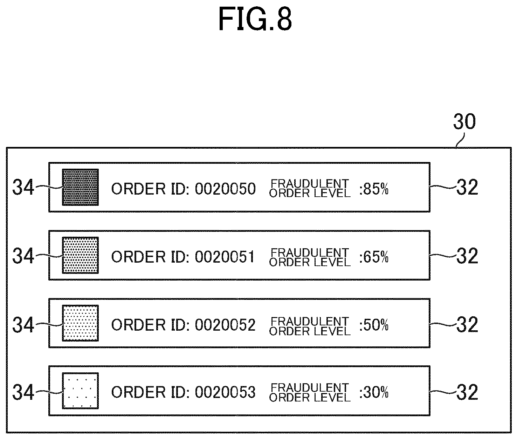

FIG. 8 is a diagram for illustrating an example of a fraudulent order confirmation screen 30 used for level determination. In this embodiment, for example, the fraudulent order confirmation screen 30 illustrated in FIG. 8 is generated in response to a request by the operator of the fraudulent order determination device 12, and is displayed on the display 12d of the fraudulent order determination device 12. In this embodiment, for example, with regard to order data for which the value of the associated result data is not determined even after list determination and rule determination, the value of the fraudulent order level data included in the estimation result data associated with the order data is referred to.

The fraudulent order confirmation screen 30 is then generated in which an order image 32 associated with each order data, for which the value of the associated result data is not determined even after list determination and rule determination, is arranged. Each order image 32 associated with the order data represents the order ID included in that piece of order data and the value of the fraudulent order level data associated with that order data, which is referred to as described above.

In each order image 32 associated with the order data, a confirmation requirement level image 34 in a mode corresponding to the value of the fraudulent order level data associated with the piece of order data is arranged. In this embodiment, for example, the level to be associated with the value of the fraudulent order level data is determined from among a plurality of levels. For example, when the value of the fraudulent order level data is from 80% to 100%, the level is determined to be 5. Similarly, when the value of the fraudulent order level data is from 60% to 80%, from 40% to 60%, from20% to 40%, and from 0% to 20%, the level is determined to be 4, 3, 2, and 1, respectively. The confirmation requirement level image 34 in the mode corresponding to the determined level is arranged. For example, the confirmation requirement level image 34 having a color corresponding to the determined level may be arranged. For example, as the value of the level is higher, the color of the confirmation requirement level image 34 may be deeper. For example, as the value of the level is higher, the brightness of the confirmation requirement level image 34 may be darker.

Displaying such a fraudulent order confirmation screen 30 enables the operator of the fraudulent order determination device 12 to determine at a glance how carefully to check whether or not each order is a fraudulent order. The fraudulent order confirmation screen 30 can also be used as an index when the operator of the fraudulent order determination device 12 examines a priority for confirming whether or not an order is a fraudulent order.

For order data having a level value that is determined based on the value of the associated fraudulent order level and is equal to or less than a predetermined threshold value, the order image 32 associated with that order data may be controlled so as not to be arranged on the fraudulent order confirmation screen 30, and result data in which 0 is set as the value and which is associated with the order data may be generated. For example, when the above-described threshold value is 2, for order data having an associated fraudulent order level data value of 40% or less, the order image 32 associated with that order data may not be arranged on the fraudulent order confirmation screen 30. Then, result data in which 0 is set as the value and which is associated with the order data may be generated.

Further, for order data having a level value that is determined based on the value of the associated fraudulent order level data and is equal to or more than a predetermined threshold value, the order image 32 associated with that order data may be controlled so as not to be arranged on the fraudulent order confirmation screen 30, and result data in which 1 is set as the value and which is associated with the order data may be generated. For example, when the above-described threshold value is 4, for order data having an associated fraudulent order level data value of 60% or more, the order image 32 associated with that order data may not be arranged on the fraudulent order confirmation screen 30. Then, result data in which 1 is set as the value and which is associated with the order data may be generated.

The above-mentioned threshold value may be changed at a predetermined timing or at a predetermined time interval.

The operator confirms whether or not the order is a fraudulent order by checking personal information on the user who performed the order corresponding to the order image 32, and inputs the value indicating the result by using the operation interface 12e. In this embodiment, the result data associated with the order data in which a value input in this manner is set is generated.

Then, the result data associated with the target order data, which is associated with the order ID of the target order data, is transmitted from the fraudulent order determination device 12 to the electronic commerce system 10 (refer to Step (7) of FIG. 2) .

The electronic commerce system 10 executes predetermined processing based on the result data transmitted in this way. For example, when the value of the result data associated with the target order data is 0, the electronic commerce system 10 may proceed with the order processing for the order associated with the target order data as a valid order. As another example, when the value of the result data associated with the target order data is 1, the electronic commerce system 10 may stop the order associated with the target order data.

Shipping of the ordered product and the like is usually performed within one business day, and therefore in order to prevent deterioration in usability, it is desired that the value of the result data be set within one day from the occurrence of the order.

The fraudulent order determination device 12 also generates result management data associated with the target order data based on the result data associated with the target order data. For example, as described above, the order ID of the target order data is set as the order ID included in the result management data. As the value of the score data included in the result management data, the score value associated with the target order data is set. As the value of the result data included in the result management data, the value of the result data associated with the target order data is set.

The result management data generated in this way and associated with the target order data is transmitted from the fraudulent order determination device 12 to the evaluation data generation device 18 (refer to Step (8) of FIG. 2). The evaluation data generation device 18 stores the result management data received from the fraudulent order determination device 12. In this way, the result data associated with the target order data is used for subsequent generation of evaluation data.

The evaluation data generation device 18 also transmits the result management data associated with the target order data, which is associated with the order ID of the target order data, to the learning data management device 20 (refer to Step (9) of FIG. 2).

The evaluation data generation device 18 generates evaluation data based on the stored result management data. The evaluation data generation device 18 may generate the evaluation data at predetermined time intervals. Otherwise, the evaluation data generation device 18 may generate evaluation data each time new result management data is stored, or each time a predetermined number of pieces of new result management data are stored.

The evaluation data generation device 18 transmits the generated evaluation data to the fraudulent order determination device 12 (refer to Step (10) of FIG. 2). The fraudulent order determination device 12 updates the stored evaluation data to the received evaluation data. After the evaluation data is updated, estimation result data is generated based on the updated evaluation data.

The learning data management device 20 generates learning data based on the feature vector (refer to Step (4) of FIG. 2) received from the feature extraction device 14 and result management data (refer to Step (9) of FIG. 2) received from the evaluation data generation device 18 and stores those pieces of data. For example, learning data associated with the target order data is generated based on the feature vector associated with the target order data and the result management data associated with the target order data. For example, learning data including the order ID, the feature vector associated with the order ID, and result management data associated with the order ID may be generated.

The generated learning data is transmitted from the learning data management device 20 to the model generation device 22 (refer to Step (11) of FIG. 2).

The model generation device 22 executes the learning of the machine learning model using the learning data received from the learning data management device 20. For example, when all the pieces of learning data corresponding to a predetermined period (e.g., one month) have been received, the learning of a machine learning model using that learning data may be executed.

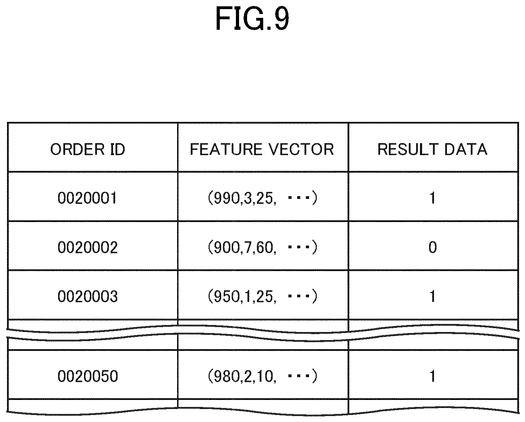

For example, the learning data shown in FIG. 4 is learning data corresponding to a first period. In FIG. 9, there is shown learning data corresponding to a second period, which is a period next to the first period. The learning data shown in FIG. 9 is learning data in which the machine learning model has not yet been learned and the order ID is 0020001 or later. Among the learning data corresponding to the second period, learning data associated with the target order data having the order ID 0020050 is also included.

For example, when all the pieces of learning data corresponding to the second period have been received, the model generation device 22 may execute the learning of the machine learning model using the learning data shown in FIG. 9. In this way, the learning data that has not yet been learned shown in FIG. 9 is also reflected in the learned model. A machine learning model in which the learning data corresponding to the first period has been learned may further learn the learning data corresponding to the second period. Amachine learning model in a predetermined initial state may further learn the learning data corresponding to the second period regardless of whether or not the machine learning model has learned the learning data corresponding to the first period.

The model generation device 22 transmits the machine learning model (learned model) having executed learning in this way to the model storage device 24 (refer to Step (12) of FIG. 2).

The score value determination device 16 monitors whether or not a new learned model is stored in the model storage device 24. When the score value determination device 16 detects that a new learned model is stored in the model storage device 24, the score value determination device 16 acquires the new learned model from the model storage device 24 (refer to Step (13) of FIG. 2). The score value determination device 16 then updates the learned model used in the determination of the score value to the learned model acquired from the model storage device 24. After the learned model is updated, the score value is determined by using the updated learned model.

In the fraudulent order determination system 1 according to this embodiment, the value of the fraudulent order level data is determined based on the evaluation data described above and a score value in which consideration is not given to the values of input data not input for learning of a learned model. The evaluation data is data in which consideration is given to the value of input data not input for learning of a learned model. As a result, the value of the fraudulent order level data is also data in which consideration is given to the value of input data not input for learning of a learned model. In the fraudulent order determination system 1 according to this embodiment, an estimation of the possibility that an order is a fraudulent order is performed based on estimation result data including fraudulent order level data in which consideration is given to the value of input data not input for learning of a learned model.

In the fraudulent order determination system 1 according to this embodiment, in order to reflect the latest trends in fraudulent use, it is desired that the machine learning model be updated in real time. However, a machine learning model may not always be updated in real time. For example, when it is required to manually input training data, or when learning data is learned by a machine learning model after being manually confirmed, the machine learning model is inevitably not updated in real time.

When there is a time lag between the learning of the machine learning model and the estimation using the machine learning model as in this case, an order that is actually a fraudulent order may be estimated as not being a fraudulent order, or an order that is not a fraudulent order may be estimated as being a fraudulent order. For example, an attribute of an order that has a low possibility of being a fraudulent order during learning may be an attribute of an order that has a high possibility of being a fraudulent order when the situation changes.

As another example, when a machine learning model that has learned orders from a certain region is used to estimate the possibility that orders from another region are fraudulent orders, the tendency of orders having a high possibility of being a fraudulent order and the meaning represented by the same score value may be different from region to region.

As described above, in the fraudulent order determination system 1 according to this embodiment, an estimation is performed based on data reflecting the value of input data not input for learning of a learned model. Therefore, with the fraudulent order determination system 1 according to this embodiment, it is possible to adapt to a difference, like the differences described above, between a situation during learning of a machine learning model and a situation during estimation using that machine learning model.

For example, a large number of orders may be transmitted to the electronic commerce system 10 without interruption for 24 hours. In such a case, the processing ability of the fraudulent order determination system 1 may not be sufficient, and it may be difficult to estimate the possibility that an order is a fraudulent order using the machine learning model while also performing learning of the machine learning model in real time. With the fraudulent order determination system 1 according to this embodiment, even in such a case, the possibility that an order is a fraudulent order can be estimated for each of a large number of orders without interruption in the electronic commerce system 10 for 24 hours.

With the fraudulent order determination system 1 according to this embodiment, even in cases where the learned machine learning model is used in various regions, evaluation of the possibility that an order is a fraudulent order can be performed in an unified manner based on a unified standard of the value of fraudulent order level data.

The present invention is not limited to the estimation of whether or not the possibility that an order is a fraudulent order, and is generally applicable to cases in which estimation is performed using a machine learning model.

The evaluation data is not limited to that shown in FIG. 5. For example, the fraudulent order determination device 12 may transmit the score value associated with the target order data to the evaluation data generation device 18. Then, in response to reception of the score value, the evaluation data generation device 18 may calculate the value of the fraudulent order level data associated with that score value based on the stored result management data. Then, the evaluation data generation device 18 may transmit to the fraudulent order determination device 12 evaluation data including the received score value and the fraudulent order level data for which a value has been calculated. Then, the fraudulent order determination device 12 may generate estimation result data including the order ID of the target order data and the value of the fraudulent order level data included in the received evaluation data. In this way, the evaluation data of the score value may be generated in accordance with the determination of the score value associated with the target order data.

For example, the evaluation data may indicate the range of a score value associated with the fraudulent level, or a threshold value for score values having a different fraudulent level.

For example, the range of a score value obtained by dividing the number of pieces of result management data in which the value of the result data is 1 by the total number of pieces of result management data may be identified as a first range, which is from 0% to 20%, a second range, which is from 20% to 40%, a third range, which is from 40% to 60%, a fourth range, which is from 60% to 80%, or a fifth range, which is from 80% to 100%. Evaluation data indicating one of the first range to the fifth range may be generated. For example, there is assumed a case in which a value obtained by dividing the number of pieces of result management data having a score value of 420 and a result data value of 1 by the total number of pieces of result management data having a score value of 420 is 0.6 (60%), and in which a value obtained by dividing the number of pieces of result management data having a score value of 680 and a result data value of 1 by the total number of pieces of result management data having a score value of 680 is 0.8 (80%). In this case, evaluation data in which values of 420 or more and 680 or less are shown as the values of the fourth range may be generated.

In this case, for example, when the score value determined for the target order data is in the first range, estimation result data may be generated in association with target order data in which 1 is set as the value of the fraudulent order level data. Similarly, when the determined score value is the second range, the third range, the fourth range, or the fifth range, estimation result data may be generated in association with target order data in which 2, 3, 4, or 5 is set as the value of the fraudulent order level data.

Further, for example, the score value obtained by dividing the number of pieces of result management data in which the value of the result data is 1 by the total number of pieces of result management data may be identified as a first threshold value, which is 20%, a second threshold value, which is 40%, a third threshold value, which is 60%, or a fourth threshold value, which is 80%. Evaluation data indicating one of the first threshold value to the fourth threshold value may be generated. For example, there is assumed a case in which a value obtained by dividing the number of pieces of result management data having a score value of 420 and a result data value of 1 by the total number of result management data having a score value of 420 is 0.6 (60%), and in which a value obtained by dividing the number of pieces of result management data having a score value of 680 and a result data value of 1 by the total number of pieces of result management data having a score value of 680 is 0.8 (80%). In this case, evaluation data may be generated in which 420 is shown as the third threshold value and 680 is shown as the fourth threshold value.

In this case, for example, when the score value determined for the target order data is less than the first threshold value, estimation result data may be generated in association with target order data in which 1 is set as the value of the fraudulent order level data. Similarly, when the determined score value is more than the first threshold value, the second threshold value, the third threshold value, or the fourth threshold value, estimation result data may be generated in association with target order data in which 2, 3, 4, or 5 is set as the value of the fraudulent order level data.

The fraudulent order confirmation screen 30 may be displayed including the order image 32 in which the confirmation requirement level image 34 corresponding to the value of the fraudulent order level data is arranged.

The value of the result data is not required to be set to any one of the two values of 1 or 0. The value of the result data may be set to any one of multiple values from 0 to 9, for example. In this case, the estimation result data may be data indicating a distribution of the possibility that the value of the result data is the value of each of those multiple values. As another example, the value of the result data may be a real number. In this case, the estimation result data may be data indicating a possibility distribution, for example, a probability density function.

In the above description, there is described a case in which, before determining whether or not an order is a fraudulent order, for all order data, the score value associated with each order data is determined and estimation result data including fraudulent order level data associated with the order data is generated. However, it is not required to determine the score value associated with the order data for all the order data before determining whether or not an order is a fraudulent order. It is also not required to generate the estimation result data including fraudulent order level data associated with the order data for all the order data before determining whether or not an order is a fraudulent order.

For example, the score value determination device 16 may determine the score value associated with the order data only for the order data for which the value of the associated result data has not been determined in the list determination or the rule determination. The evaluation data generation device 18 may also generate the estimation result data associated with the order data only for the order data for which the value of the associated result data has not been determined in the list determination or the rule determination.

For example, when the score value associated with the order data is equal to or less than a predetermined value (e.g., 50 or less), estimation result data associated with the order data may not be generated. In this case, result data may be generated in which 0 is set as a value and which is associated with the order data. For example, when the score value associated with the order data is equal to or more than a predetermined value (e.g., 950 or more), estimation result data associated with the order data may not be generated. In this case, result data may be generated in which 1 is set as a value and which is associated with the order data.

It is also not required to execute the determination of whether or not the order associated with the target order data is a fraudulent order based on the three-step determination of list determination, rule determination, and level determination. For example, the determination of whether or not the order associated with the target order data is a fraudulent order may be executed based on a two-step determination of list determination and rule determination, list determination and level determination, or rule determination and level determination. As another example, the determination of whether or not the order associated with the target order data is a fraudulent order may be performed based on only one of list determination, rule determination, and level determination. The determination of whether or not the order associated with the target order data is a fraudulent order may also include a determination based on a method other than list determination, rule determination, and level determination.

The functions of the fraudulent order determination device 12, the score value determination device 16, and the evaluation data generation device 18 of this embodiment, and the processing to be executed by the fraudulent order determination system 1 of this embodiment are further described below.

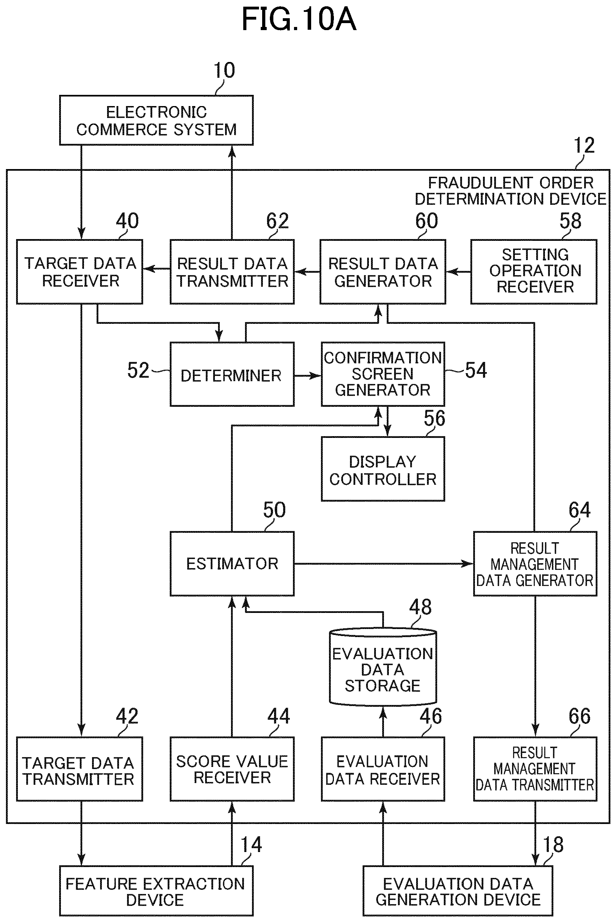

FIG. 10A is a functional block diagram for illustrating an example of the functions to be implemented by the fraudulent order determination device 12 of this embodiment. It is not required for all of the functions illustrated in FIG. 10A to be implemented by the fraudulent order determination device 12 of this embodiment, and functions other than those illustrated in FIG. 10A may be implemented.

As illustrated in FIG. 10A, the fraudulent order determination device 12 of this embodiment includes, in terms of its functions, for example, a target data receiver 40, a target data transmitter 42, a score value receiver 44, an evaluation data receiver 46, an evaluation data storage 48, an estimator 50, a determiner 52, a confirmation screen generator 54, a display controller 56, a setting operation receiver 58, a result data generator 60, a result data transmitter 62, a result management data generator 64, and a result management data transmitter 66.

The target data receiver 40, the target data transmitter 42, the score value receiver 44, the evaluation data receiver 46, the result data transmitter 62, and the result management data transmitter 66 are mainly implemented by the communicator 12c. The evaluation data storage 48 is mainly implemented by the storage 12b. The estimator 50, the confirmation screen generator 54, the result data generator 60, and the result management data generator 64 are mainly implemented by the processor 12a. The determiner 52 is mainly implemented by the processor 12a and the storage 12b. The display controller 56 is mainly implemented by the processor 12a and the display 12d. The setting operation receiver 58 is mainly implemented by the operation interface 12e.

The above-mentioned functions may also be implemented by the processor 12a executing a program including commands corresponding to the functions, which is installed in the fraudulent order determination device 12 being a computer. The program may be supplied to the fraudulent order determination device 12 via, for example, a computer-readable information storage medium such as an optical disc, a magnetic disk, a magnetic tape, and a magneto-optical disk, or the Internet.

In this embodiment, for example, the target data receiver 40 is configured to receive target data from the electronic commerce system 10. The target data is data on which estimation is to be performed by the fraudulent order determination device 12, for example, target order data like that shown in FIG. 3.

In this embodiment, for example, the target data transmitter 42 is configured to transmit the target data received by the target data receiver 40 to the feature extraction device 14. In this embodiment, for example, the input data to be estimated is generated by the feature extraction device 14 based on the target data. For example, the feature vector associated with the target order data in the above-mentioned example corresponds to the input data to be estimated.

In this embodiment, for example, the score value receiver 44 is configured to receive a score value determined based on the output produced when the input data to be estimated is input to the learned model to be used to generate the estimation result data indicating the result of an estimation relating to the input data. For example, in the example described above, the score value determined based on the output produced when the feature vector associated with the target order data is input to the learned model corresponds to the score value received by the score value receiver 44. The score value receiver 44 may receive, as described above, the score value transmitted from the score value determination device 16 via the feature extraction device 14.

In this embodiment, for example, the evaluation data receiver 46 is configured to receive from the evaluation data generation device 18 evaluation data of a score value generated based on known result data for each of one or more pieces of input data. The known result data corresponds to, for example, in the example described above, the result data in which the fraudulent order determination device 12 has determined a value, or the operator of the fraudulent order determination device 12 has set a value.

In this embodiment, for example, the evaluation data storage 48 is configured to store the evaluation data received by the evaluation data receiver 46. When evaluation data is already stored in the evaluation data storage 48, the evaluation data storage 48 may update the stored evaluation data to the evaluation data received by the evaluation data receiver 46.

In this embodiment, for example, the estimator 50 is configured to generate estimation result data indicating the result of the estimation relating to the input data to be estimated, based on the score value determined based on the output produced when the input data to be estimated is input to the learned model and the evaluation data. For example, in the above-mentioned example, the estimation result data associated with the target order data shown in FIG. 6 generated based on the score value associated with the target order data and the evaluation data corresponds to the estimation result data generated by the estimator 50. After the evaluation data is updated as described above, the estimator 50 generates estimation result data based on the updated evaluation data.

In this embodiment, for example, the determiner 52 is configured to execute the determination relating to the target data. For example, in the example described above, the determination based on a white list, a black list, a predetermined rule, or the like regarding whether or not the order associated with the target order data is a fraudulent order corresponds to the determination executed by the determiner 52. The determiner 52 may store the data indicating the white list, the black list, and the predetermined rule.

In this embodiment, for example, the confirmation screen generator 54 generates a confirmation screen in which information on the input to be estimated is arranged in a mode corresponding to a value of the estimation result data relating to the input data to be estimated. For example, the fraudulent order confirmation screen 30 in the above-mentioned example corresponds to the confirmation screen generated by the confirmation screen generator 54.

The confirmation screen generator 54 may also be configured to store a list of identification information on target data for which the determination result has not been determined by the determiner 52. When the determination result of the target data is not determined, the determiner 52 may add the identification information on that target data to the list. For example, in the above-mentioned example, the list corresponds to the list of the order IDs. For example, when it is not determined whether or not the order associated with the target order data is a fraudulent order, the order ID of that target order data may be added to the list.

The confirmation screen generator 54 may generate the confirmation screen based on the identification information included in the stored list. For example, the confirmation screen generator 54 may generate the fraudulent order confirmation screen 30 in which the order image 32 corresponding to order data whose order ID is included in the stored list is arranged. As described above, the confirmation screen generator 54 may determine a level to which the input data to be estimated belongs from among a plurality of levels based on the value of the estimation result data relating to the input data to be estimated. The confirmation screen generator 54 may also generate a screen in which information on the input data to be estimated is arranged in a mode corresponding to the level to which the input data to be estimated belongs. The confirmation screen generator 54 may perform control such that information on the input data to be estimated belonging to a level equal to or less than a predetermined threshold value is not arranged on the screen. In this case, the confirmation screen generator 54 generates a screen in which information on the input data to be estimated belonging to a level that is equal to or lower than a predetermined threshold value is not arranged.

In this embodiment, for example, the display controller 56 is configured to display information on the input data to be estimated in a mode corresponding to the value of estimation result data relating to the input data to be estimated. For example, the display controller 56 may display a confirmation screen, for example, the fraudulent order confirmation screen 30, generated by the confirmation screen generator 54.

In this embodiment, for example, the setting operation receiver 58 is configured to receive an operation of setting the value of the result data associated with the target data from the operator of the fraudulent order determination device 12. The setting operation receiver 58 may delete, in response to the reception of an operation, the identification information on the target data from the list stored by the confirmation screen generator 54. In the example described above, for example, the setting operation receiver 58 may delete the order ID of the target order data from the list stored by the confirmation screen generator 54 in response to the operation of setting the value of the result data associated with the target order data.

In this embodiment, for example, the result data generator 60 is configured to generate result data in which the value indicated by the determination result determined by the determiner 52 or the value corresponding to the operation received by the setting operation receiver 58 is set. The determiner 52 may determine whether or not the order associated with the target order data is a fraudulent order based on the operation received by the setting operation receiver 58. The result data generator 60 may generate result data in which a value corresponding to the result of the determination by the determiner 52 is set.

In this embodiment, for example, the result data transmitter 62 is configured to transmit the result data generated by the result data generator 60 to the electronic commerce system 10.

In this embodiment, for example, the result management data generator 64 is configured to generate result management data including a score value determined based on the output produced when the input data to be estimated is input to the learned model, and known result data regarding the input data to be estimated. For example, in the example described above, the result management data generated based on the result data associated with the target order data and associated with the target order data corresponds to the result management data generated by the result management data generator 64.

In this embodiment, for example, the result management data transmitter 66 is configured to transmit the result management data generated by the result management data generator 64 to the evaluation data generation device 18.

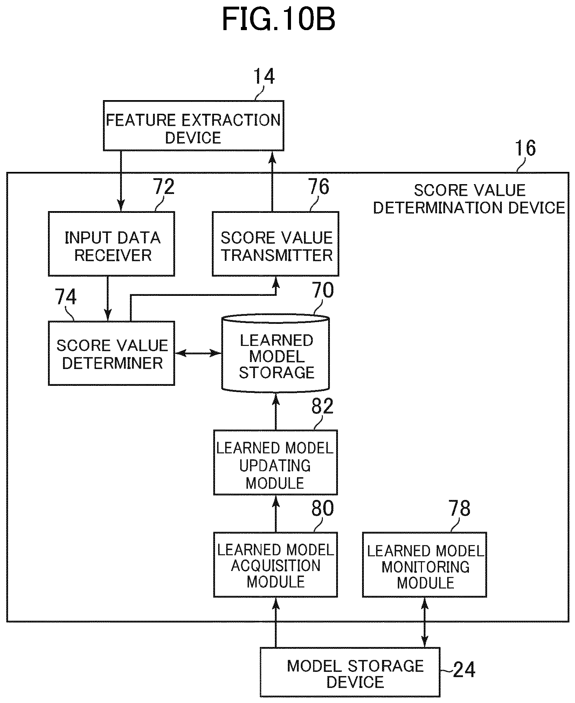

FIG. 10B is a functional block diagram for illustrating an example of the functions to be implemented by the score value determination device 16 of this embodiment. It is not required for all of the functions illustrated in FIG. 10B to be implemented by the score value determination device 16 of this embodiment, and functions other than those illustrated in FIG. 10B maybe implemented.

As illustrated in FIG. 10B, the score value determination device 16 of this embodiment includes, in terms of its functions, for example, a learned model storage 70, an input data receiver 72, a score value determiner 74, a score value transmitter 76, a learned model monitoring module 78, a learned model acquisition module 80, and a learned model updating module 82.

The learned model storage 70 is implemented mainly by the storage 16b. The input data receiver 72, the score value transmitter 76, and the learnedmodel acquisition module 80 are mainly implemented by the communicator 16c. The learned model monitoring module 78 is mainly implemented by the processor 16a and the communicator 16c. The score value determiner 74 and the learned model updating module 82 are mainly implemented by the processor 16a.

The above-mentioned functions may also be implemented by the processor 16a executing a program including commands corresponding to the functions, which is installed in the score value determination device 16 being a computer. The program may be supplied to the score value determination device 16 via, for example, a computer-readable information storage medium such as an optical disc, a magnetic disk, a magnetic tape, and a magneto-optical disk, or the Internet.

In this embodiment, for example, the learned model storage 70 is configured to store the learned model used to generate the estimation result data indicating the result of the estimation relating to the input data to be estimated. The learned model storage 70 may also store the learned model used to determine the score value.

In this embodiment, for example, the input data receiver 72 is configured to receive input data from the feature extraction device 14. For example, in the example described above, the feature vector associated with the order data corresponds to the input data received by the input data receiver 72.

In this embodiment, for example, the score value determiner 74 is configured to determine the score value of the input data received by the input data receiver 72 based on the output produced when the input data is input to the learned model stored in the learned model storage 70.

In this embodiment, for example, the score value transmitter 76 is configured to transmit the score value of the input data determined by the score value determiner 74 to the feature extraction device 14. This score value is transmitted to the fraudulent order determination device 12 via the feature extraction device 14, for example.

In this embodiment, for example, the learned model monitoring module 78 is configured to monitor whether or not a new learned model is stored in the model storage device 24.

In this embodiment, for example, the learnedmodel acquisition module 80 is configured to acquire, when it is detected that a new learned model is stored in the model storage device 24, the new learned model from the model storage device 24.

In this embodiment, for example, the learned model updating module 82 is configured to update the learned model stored in the learned model storage 70 to the learned model acquired by the learned model acquisition module 80. As described above, after the learned model updating module 82 updates the learned model, the score value determiner 74 determines the score value of the input data based on the output produced when the input data is input to the updated learned model.

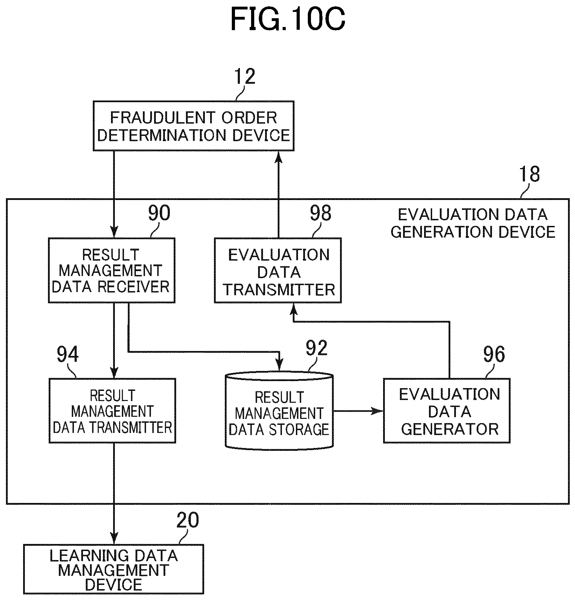

FIG. 10C is a functional block diagram for illustrating an example of the functions to be implemented by the evaluation data generation device 18 of this embodiment. It is not required for all of the functions illustrated in FIG. 10C to be implemented by the evaluation data generation device 18 of this embodiment, and functions other than those illustrated in FIG. 10C maybe implemented.

As illustrated in FIG. 10C, the evaluation data generation device 18 of this embodiment includes, in terms of its functions, for example, a result management data receiver 90, a result management data storage 92, a result management data transmitter 94, an evaluation data generator 96, and an evaluation data transmitter 98.

The result management data receiver 90, the result management data transmitter 94, and the evaluation data transmitter 98 are mainly implemented by the communicator 18c. The result management data storage 92 is mainly implemented by the storage 18b. The evaluation data generator 96 is mainly implemented by the processor 18a.

The above-mentioned functions may also be implemented by the processor 18a executing a program including commands corresponding to the functions, which is installed in the evaluation data generation device 18 being a computer. The program may be supplied to the evaluation data generation device 18 via, for example, a computer-readable information storage medium such as an optical disc, a magnetic disk, a magnetic tape, and a magneto-optical disk, or the Internet.

In this embodiment, for example, the result management data receiver 90 is configured to receive result management data from the fraudulent order determination device 12.

In this embodiment, for example, the result management data storage 92 is configured to store the result management data received by the result management data receiver 90.

In this embodiment, for example, the result management data transmitter 94 is configured to transmit the result management data received by the result management data receiver 90 to the learning data management device 20.

In this embodiment, for example, the evaluation data generator 96 is configured to generate evaluation data of the score value based on known result data for each of one or more pieces of input data not input for learning of the learned model stored in the learned model storage 70. This means that the evaluation data may be generated based on known result data for each of one or more pieces of input data not input and one or more pieces of input data already input for learning of the learned model, or the evaluation data may be generated based on known result data for each of only one or more pieces of input data not input for learning of the learned model. The evaluation data generator 96 may generate the evaluation data based on the result management data stored in the result management data storage 92.

Further, as shown in FIG. 5, the evaluation data generator 96 may generate evaluation data of the score value for each score value. In this case, the estimator 50 may generate, based on a score value determined based on the output produced when the input data to be estimated is input to the learned model and the evaluation data of that score value, estimation result data relating to the input data to be estimated.

As described above, the evaluation data generator 96 may generate the evaluation data of the score value in accordance with a determination of the score value based on the output produced when the input data to be estimated is input to the learned model. In this case, the estimator 50 may generate estimation result data relating to the input data to be estimated, based on the evaluation data of the score value generated in accordance with the determination of the score value.

The evaluation data generator 96 may generate, as evaluation data of the score value, data indicating a representative value of the result data associated with each of the one or more pieces of input data for which the score value is determined. For example, as described above, a value may be calculated by dividing the number of pieces of result management data in which the value of the score data is a specific score value and the value of the result data is 1 by the total number of pieces of result management data in which the value of the score data is that score value. Evaluation data of the score value may be generated in which the value calculated in this way is indicated as a representative value of the result data associated with each of the one or more pieces of input data in which the score value is to be determined.

The evaluation data generator 96 may generate evaluation data indicating the above-mentioned first to fifth ranges. The evaluation data generator 96 may also generate evaluation data indicating the above-mentioned first threshold value to fourth threshold value.

In this embodiment, for example, the evaluation data transmitter 98 is configured to transmit the evaluation data generated by the evaluation data generator 96 to the fraudulent order determination device 12.

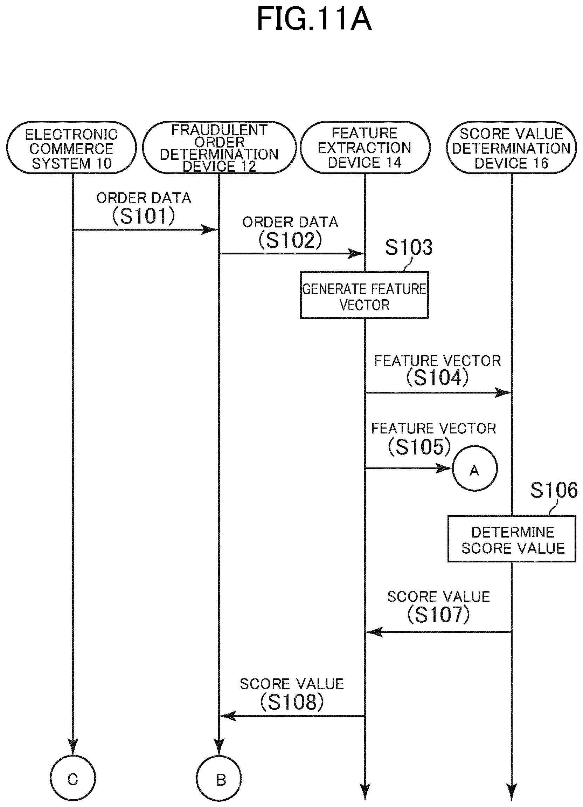

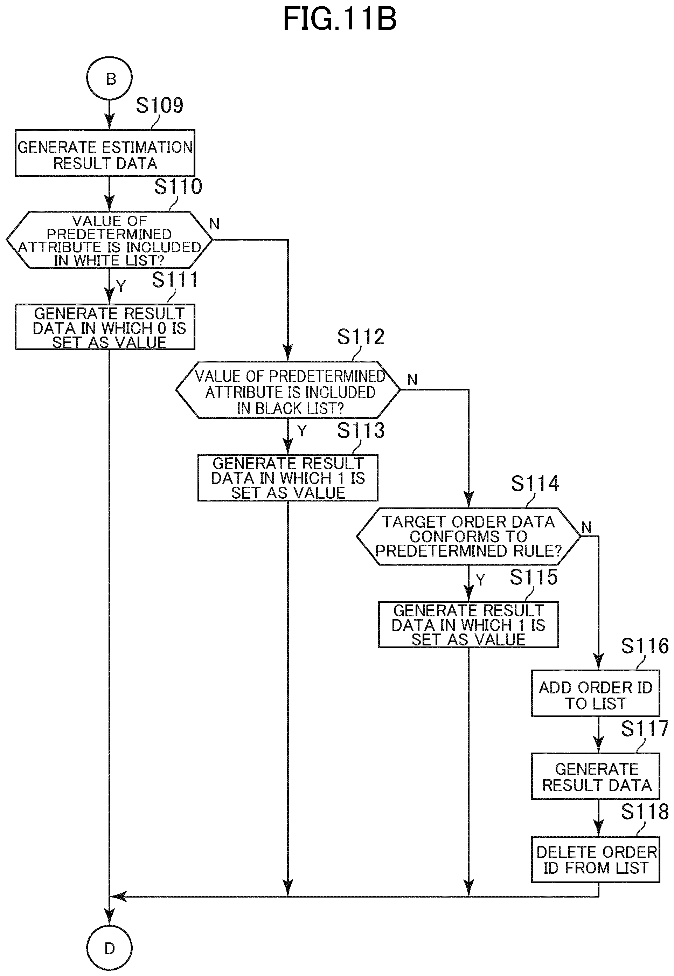

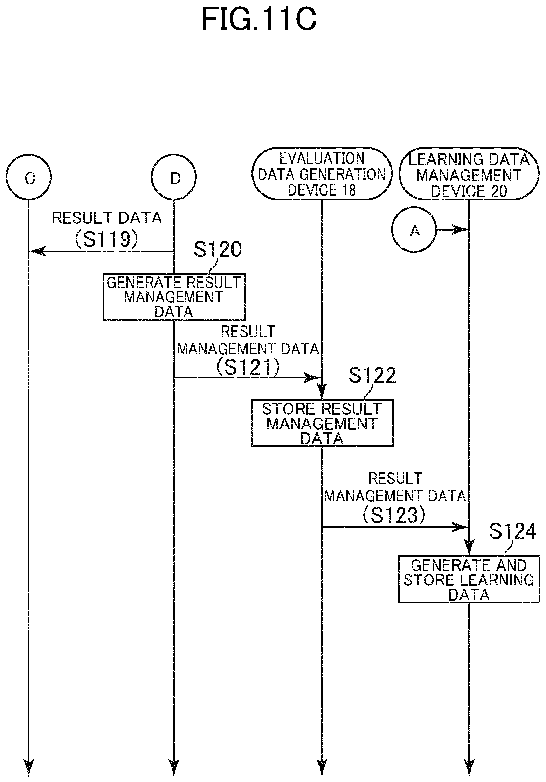

There is now described an example of a flow of processing to be executed in response to reception of target order data by the fraudulent order determination device 12 in the fraudulent order determination system 1 of this embodiment with reference to FIG. 11A, FIG. 11B, and FIG. 11C.

First, the target data receiver 40 of the fraudulent order determination device 12 receives target order data from the electronic commerce system 10 (Step S101).

The target data transmitter 42 of the fraudulent order determination device 12 transmits the target order data received in the processing illustrated in Step S101 to the feature extraction device 14. The feature extraction device 14 receives the target order data (Step S102).

The feature extraction device 14 then generates a feature vector associated with the target order data based on the target order data received in the processing illustrated in Step S102 (Step S103).

The feature extraction device 14 transmits the feature vector generated in the processing illustrated in Step S103 to the score value determination device 16 in association with the order ID of the target order data received in the processing illustrated in Step S102. The input data receiver 72 of the score value determination device 16 receives the feature vector (Step S104).

The feature extraction device 14 also transmits the feature vector generated in the processing illustrated in Step S103 to the learning data management device 20 in association with the order ID of the target order data received in the processing illustrated in Step S102. The learning data management device 20 receives the feature vector (Step S105).

The score value determiner 74 of the score value determination device 16 determines a score value based on the output produced when the feature vector received in the processing illustrated in Step S104 is input to the learned model stored in the learned model storage 70 (Step S106).

The score value transmitter 76 of the score value determination device 16 then transmits to the feature extraction device 14 the score value determined in the processing illustrated in Step S105 in association with the order ID associated with the feature vector received in the processing illustrated in Step S104. The feature extraction device 14 receives the score value (Step S107).

The feature extraction device 14 transmits the score value associated with the order ID received in the processing illustrated in Step S107 to the fraudulent order determination device 12. The fraudulent order determination device 12 receives the score value (Step S108).

The estimator 50 of the fraudulent order determination device 12 generates estimation result data associated with the target order data based on the score value received in the processing illustrated in Step S108 and the evaluation data stored in the evaluation data storage 48 (Step S109).

The determiner 52 of the fraudulent order determination device 12 determines whether or not the value of a predetermined attribute of the target order data received in the processing illustrated in Step S101 is included in the white list stored in the determiner 52 of the fraudulent order determination device 12 (Step S110).

When it is determined that the value of the predetermined attribute is included in the white list (Step S110: Y), the result data generator 60 generates result data in which 0 is set as a value (Step S111).

On the contrary, when it is determined that the value of the predetermined attribute is not included in the white list (Step S110: N), the determiner 52 determines whether or not the value of the predetermined attribute of the target order data received in the processing illustrated in Step S101 is included in the black list stored in the determiner 52 of the fraudulent order determination device 12 (Step S112).

When it is determined that the value of the predetermined attribute is included in the black list (Step S112: Y), the result data generator 60 generates result data in which 1 is set as a value (Step S113).

On the contrary, when it is determined that the value of the predetermined attribute is not included in the black list (Step S112: N), the determiner 52 determines whether or not the target order data received in the processing illustrated in Step S101 conforms to a predetermined rule relating to fraudulent orders (Step S114).

When it is determined that the target order data conforms to the predetermined rule (Step S114: Y), the result data generator 60 generates result data in which 1 is set as a value (Step S115).

When it is determined that the target order data does not conform to the predetermined rule (Step S114: N), the determiner 52 adds the order ID of the target order data received in the processing illustrated in Step S101 to the list stored by the confirmation screen generator 54 (Step S116).

Then, in response to reception of an operation of setting the value of the result data associated with the target data by the setting operation receiver 58, the result data generator 60 generates result data in which a value corresponding to the operation received by the setting operation receiver 58 is set (Step S117). The setting operation receiver 58 also deletes the order ID added in the processing illustrated in Step S116 from the list stored by the confirmation screen generator 54 (Step S118).

When the processing illustrated in Step S111, Step S113, Step S115, or Step S118 ends, the result data transmitter 62 transmits to the electronic commerce system 10 the generated result data in association with the order ID of the target order data received in the processing illustrated in Step S101 (Step S119).

The result management data generator 64 generates result management data based on the score value received in the processing illustrated in Step S107 and the result data generated in the processing illustrated in Step S111, Step S113, Step S115, or Step S118 (Step S120).

The result management data transmitter 66 transmits the result management data generated in the processing illustrated in Step S120 to the evaluation data generation device 18. The result management data receiver 90 of the evaluation data generation device 18 receives the result management data (Step S121). Then, the result management data receiver 90 stores the received result management data in the result management data storage 92 (Step S122).

The result management data transmitter 94 of the evaluation data generation device 18 transmits the result management data received in the processing illustrated in Step S121 to the learning data management device 20. The learning data management device 20 receives the result management data (Step S123).

The learning data management device 20 generates learning data based on the feature vector received in the processing illustrated in Step S105 and the result management data received in the processing illustrated in Step S123 and stores those pieces of data (Step S124) . Then, the processing illustrated in the present processing example is ended.

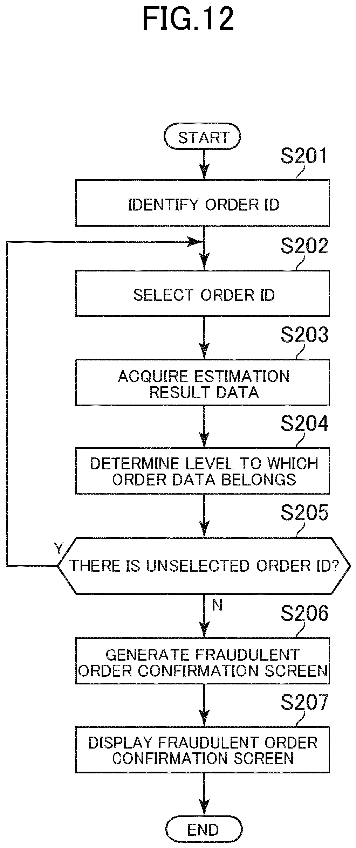

There is now described an example of a flow of processing relating to generation and display of the fraudulent order confirmation screen 30 by the fraudulent order determination device 12 of this embodiment with reference to the flowchart illustrated in FIG. 12.

First, in response to a request by the operator of the fraudulent order determination device 12, the confirmation screen generator 54 identifies one or more order IDs included in the stored list (Step S201).

The confirmation screen generator 54 then selects, from among the one or more order IDs identified in the processing illustrated in Step S201, one order ID for which the processing illustrated in Step S203 and Step S204 described below has not been executed (Step S202).

The confirmation screen generator 54 then acquires the estimation result data associated with the order ID selected in the processing illustrated in Step S202 (Step S203).

Then, the confirmation screen generator 54 determines the level to which the order data associated with the estimation result data belongs, based on a value of fraudulent order level data included in the estimation result data acquired in the processing illustrated in Step S203 (Step S204).

The confirmation screen generator 54 then confirms whether or not there is an unselected order ID in the processing illustrated in Step S202 among the one or more order IDs identified in the processing illustrated in Step S201 (Step S205).

When there is an unselected order ID (Step S205: Y), the processing returns to Step S202.

When there are no unselected order IDs (Step S205: N), the confirmation screen generator 54 generates the fraudulent order confirmation screen 30 in which the order image 32 associated with each of the one or more order IDs identified in the processing illustrated in Step S201 is arranged (Step S206). In the order image 32 associated with the order ID, the order ID and the value of the fraudulent order level data included in the estimation result data acquired in the processing illustrated in Step S203 are arranged. In the order image 32, there is also arranged the confirmation requirement level image 34 having a color or gradation value corresponding to the level determined in the processing illustrated in Step S204.

The display controller 56 then displays on the display 12d the fraudulent order confirmation screen 30 generated in the processing illustrated in Step S206 (Step S207), and the processing illustrated in this processing example is ended.

In the processing illustrated in Step S206, the confirmation screen generator 54 may exclude from the one or more order IDs identified in the processing illustrated in Step S201 the order IDs of order data for which the value of the level determined in the processing illustrated in Step S204 is equal to or less than a predetermined threshold value. The confirmation screen generator 54 may also generate the fraudulent order confirmation screen 30 in which the order image 32 associated with each excluded order ID is arranged.

A part or all of the functions to be implemented by the fraudulent order determination device 12, the feature extraction device 14, the score value determination device 16, the evaluation data generation device 18, the learning data management device 20, the model generation device 22, and the model storage device 24 may be implemented by one device. Further, the functions to be implemented by the fraudulent order determination device 12, the feature extraction device 14, the score value determination device 16, the evaluation data generation device 18, the learning data management device 20, the model generation device 22, or the model storage device 24 may be implemented by a plurality of devices.

Further, the specific character strings and numerical values described above and the specific numerical values and character strings in the drawings are merely exemplary.

## Claims

1. An estimating system (1) comprising one or more computers (16, 18, 12) configured to implement:
score value determination means (16, 74) for determining a score value of input data, the score value of the input data being the score value output by a learned model when the input data is input to the learned model,
wherein the score value determination means is configured to determine a respective score value for each of one or more pieces of input data not input for learning of the learned model,
wherein the learned model is implemented by a processor of one of the one or more computers and is to be used to generate estimation result data indicating a result of an estimation relating to first input data to be estimated;
evaluation data generation means (18, 96) for generating evaluation data of the determined one or more score values, based on known result data for each of the one or more pieces of input data, wherein, for each given score value of the determined one or more score values, the evaluation data generation means is configured to generate data indicating a representative value of the result data associated with each of the one or more pieces of input data determined to have the given score value, as the evaluation data of the score value; and
estimating means (12, 50) for generating estimation result data indicating a result of the estimation relating to the first input data, based on a first score value output by the learned model when the first input data is input to the learned model, and on the evaluation data; wherein the estimating means is configured to generate the estimation result data relating to the first input data, based on the first score value, and on the representative value indicated by the evaluation data of the first score value; wherein the estimation result data relating to the first input data includes the representative value indicated by the evaluation data of the first score value.

2. The estimating system (1) according to claim 1, further comprising a display controller (12, 56) configured to display information on the first input data in a mode corresponding to a value of the estimation result data relating to the first input data.

3. The estimating system (1) according to claim 2, wherein the display controller (12, 56) is configured to display information on the first input data in a mode corresponding to a level to which the first input data belongs, the level being determined from among a plurality of levels based on a value of the estimation result data relating to the first input data.

4. A computer implemented estimating method, comprising the steps of:
determining (S106) a score value of input data, the score value of the input data being the score value output by a learned model when the input data is input to the learned model,
wherein a respective score is determined for each of one or more pieces of input data not input for learning of the learned model,
wherein the learned model is computer implemented and is to be used to generate estimation result data indicating a result of an estimation relating to first input data to be estimated;
generating evaluation data of the determined one or more score values based on known result data for each of the one or more pieces of input data, wherein, for each given score value of the determined one or more score values, generating the evaluation data comprises generating data indicating a representative value of the result data associated with each of the one or more pieces of input data determined to have the given score value, as the evaluation data of the score value; and
generating estimation result data (S109) indicating a result of the estimation relating to the first input data, based on a first score value output by the learned model when the first input data is input to the learned model, and on the evaluation data; wherein the estimation result data relating to the first input data is generated based on the first score value and on the representative value indicated by the evaluation data of the first score value; wherein the estimation result data relating to the first input data includes the representative value indicated by the evaluation data of the first score value.

5. A computer readable storage medium having stored thereon a program for causing a computer (16, 18, 12) to execute the procedures of:
determining (S106) a score value of input data, the score value of the input data being the score value output by a learned model when the input data is input to the learned model,
wherein a respective score is determined for each of one or more pieces of input data not input for learning of the learned model,
wherein the learned model is computer implemented and is to be used to generate estimation result data indicating a result of an estimation relating to first input data to be estimated;
generating evaluation data of the determined one or more score values based on known result data for each of the one or more pieces of input data, wherein, for each given score value of the determined one or more score values, generating the evaluation data comprises generating data indicating a representative value of the result data associated with each of the one or more pieces of input data determined to have the given score value, as the evaluation data of the score value; and
generating (S109) estimation result data indicating a result of the estimation relating to the first input data, based on a first score value output by the learned model when the first input data is input to the learned model, and on the evaluation data; wherein the estimation result data relating to the first input data is generated based on the first score value and on the representative value indicated by the evaluation data of the first score value; wherein the estimation result data relating to the first input data includes the representative value indicated by the evaluation data of the first score value.

## Patentansprüche

1. Schätzsystem (1), umfassend einen oder mehrere Computer (16, 18, 12), die konfiguriert sind, um zu implementieren:
Bewertungswertbestimmungsmittel (16, 74) zum Bestimmen eines Bewertungswerts von Eingabedaten, wobei der Bewertungswert der Eingabedaten der Bewertungswert ist, der durch ein erlerntes Modell ausgegeben wird, wenn die Eingabedaten in das erlernte Modell eingegeben werden,
wobei das Bewertungswertbestimmungsmittel konfiguriert ist, um einen jeweiligen Bewertungswert für jedes von einem oder mehreren Eingabedatenelementen zu bestimmen, die nicht zum Erlernen des erlernten Modells eingegeben werden,
wobei das erlernte Modell durch einen Prozessor eines des einen oder der mehreren Computer implementiert wird und zu verwenden ist, um Schätzungsergebnisdaten zu erzeugen, die ein Ergebnis einer Schätzung bezüglich erster Eingabedaten angeben, die zu schätzen sind;
Beurteilungsdatenerzeugungsmittel (18, 96) zum Erzeugen von Beurteilungsdaten des bestimmten einen oder der mehreren Bewertungswerte, basierend auf bekannten Ergebnisdaten für jedes des einen oder der mehreren Eingabedatenelemente, wobei, für jeden gegebenen Bewertungswert des bestimmten einen oder der mehreren Bewertungswerte, das Beurteilungsdatenerzeugungsmittel konfiguriert ist, um Daten zu erzeugen, die einen repräsentativen Wert der Ergebnisdaten angeben, die jedem des einen oder der mehreren Eingabedatenelemente zugeordnet sind, die bestimmt sind, den gegebenen Bewertungswert aufzuweisen, als die Beurteilungsdaten des Bewertungswerts; und
Schätzmittel (12, 50) zum Erzeugen von Schätzungsergebnisdaten, die ein Ergebnis der Schätzung bezüglich der ersten Eingabedaten angeben, basierend auf einem ersten Bewertungswert, der durch das erlernte Modell ausgegeben wird, wenn die ersten Eingabedaten in das erlernte Modell eingegeben werden, und auf den Beurteilungsdaten; wobei das Schätzmittel konfiguriert ist, um die Schätzungsergebnisdaten bezüglich der ersten Eingabedaten zu erzeugen, basierend auf dem ersten Bewertungswert und auf dem repräsentativen Wert, der durch die Beurteilungsdaten des ersten Bewertungswertes angegeben wird; wobei die Schätzungsergebnisdaten bezüglich der ersten Eingabedaten den repräsentativen Wert einschließen, der durch die Beurteilungsdaten des ersten Bewertungswerts angegeben wird.

2. Schätzsystem (1) nach Anspruch 1, ferner umfassend eine Anzeigesteuerung (12, 56), die konfiguriert ist, um Informationen zu den ersten Eingabedaten in einem Modus anzuzeigen, der einem Wert der Schätzungsergebnisdaten bezüglich der ersten Eingabedaten entspricht.

3. Schätzsystem (1) nach Anspruch 2, wobei die Anzeigesteuerung (12, 56) konfiguriert ist, um Informationen zu den ersten Eingabedaten in einem Modus anzuzeigen, der einer Ebene entspricht, zu der die ersten Eingabedaten gehören, wobei die Ebene unter einer Vielzahl von Ebenen basierend auf einem Wert der Schätzungsergebnisdaten bezüglich der ersten Eingabedaten bestimmt wird.

4. Computerimplementiertes Schätzverfahren, umfassend die Schritte:
Bestimmen (S106) eines Bewertungswerts von Eingabedaten, wobei der Bewertungswert der Eingabedaten der Bewertungswert ist, der durch ein erlerntes Modell ausgegeben wird, wenn die Eingabedaten in das erlernte Modell eingegeben werden,
wobei eine jeweilige Bewertung für jedes von einem oder mehreren Eingabedatenelementen bestimmt wird, die nicht zum Erlernen des erlernten Modells eingegeben werden,
wobei das erlernte Modell computerimplementiert ist und zu verwenden ist, um Schätzungsergebnisdaten zu erzeugen, die ein Ergebnis einer Schätzung bezüglich erster Eingabedaten angeben, die zu schätzen sind;
Erzeugen von Beurteilungsdaten des bestimmten einen oder der mehreren Bewertungswerte basierend auf bekannten Ergebnisdaten für jedes des einen oder der mehreren Eingabedatenelemente, wobei, für jeden gegebenen Bewertungswert des bestimmten einen oder der mehreren Bewertungswerte, das Erzeugen der Beurteilungsdaten das Erzeugen von Daten umfasst, die einen repräsentativen Wert der Ergebnisdaten angeben, die jedem des einen oder der mehreren Eingabedatenelemente zugeordnet sind, die bestimmt sind, den gegebenen Bewertungswert aufzuweisen, als die Beurteilungsdaten des Bewertungswerts; und
Erzeugen von Schätzungsergebnisdaten (S109), die ein Ergebnis der Schätzung bezüglich der ersten Eingabedaten angeben, basierend auf einem ersten Bewertungswert, der durch das erlernte Modell ausgegeben wird, wenn die ersten Eingabedaten in das erlernte Modell eingegeben werden, und auf den Beurteilungsdaten; wobei die Schätzungsergebnisdaten bezüglich der ersten Eingabedaten basierend auf dem ersten Bewertungswert und auf dem repräsentativen Wert erzeugt werden, der durch die Beurteilungsdaten des ersten Bewertungswertes angegeben wird; wobei die Schätzungsergebnisdaten bezüglich der ersten Eingabedaten den repräsentativen Wert einschließen, der durch die Beurteilungsdaten des ersten Bewertungswerts angegeben wird.

5. Computerlesbares Speichermedium, auf dem ein Programm gespeichert ist, zum Veranlassen eines Computers (16, 18, 12), die Vorgänge auszuführen von:
Bestimmen (S106) eines Bewertungswerts von Eingabedaten, wobei der Bewertungswert der Eingabedaten der Bewertungswert ist, der durch ein erlerntes Modell ausgegeben wird, wenn die Eingabedaten in das erlernte Modell eingegeben werden,
wobei eine jeweilige Bewertung für jedes von einem oder mehreren Eingabedatenelementen bestimmt wird, die nicht zum Erlernen des erlernten Modells eingegeben werden,
wobei das erlernte Modell computerimplementiert ist und zu verwenden ist, um Schätzungsergebnisdaten zu erzeugen, die ein Ergebnis einer Schätzung bezüglich erster Eingabedaten anzugeben, die zu schätzen sind;
Erzeugen von Beurteilungsdaten des bestimmten einen oder der mehreren Bewertungswerte basierend auf bekannten Ergebnisdaten für jedes des einen oder der mehreren Eingabedatenelemente, wobei, für jeden gegebenen Bewertungswert des bestimmten einen oder der mehreren Bewertungswerte, das Erzeugen der Beurteilungsdaten das Erzeugen von Daten umfasst, die einen repräsentativen Wert der Ergebnisdaten angeben, die jedem des einen oder der mehreren Eingabedatenelemente zugeordnet sind, die bestimmt sind, den gegebenen Bewertungswert aufzuweisen, als die Beurteilungsdaten des Bewertungswerts; und
Erzeugen (S109) von Schätzungsergebnisdaten, die ein Ergebnis der Schätzung bezüglich der ersten Eingabedaten angeben, basierend auf einem ersten Bewertungswert, der durch das erlernte Modell ausgegeben wird, wenn die ersten Eingabedaten in das erlernte Modell eingegeben werden, und auf den Beurteilungsdaten; wobei die Schätzungsergebnisdaten bezüglich der ersten Eingabedaten basierend auf dem ersten Bewertungswert und auf dem repräsentativen Wert erzeugt werden, der durch die Beurteilungsdaten des ersten Bewertungswertes angegeben wird; wobei die Schätzungsergebnisdaten bezüglich der ersten Eingabedaten den repräsentativen Wert einschließen, der durch die Beurteilungsdaten des ersten Bewertungswerts angegeben wird.

## Revendications

1. Système d'estimation (1) comprenant un ou plusieurs ordinateurs (16, 18, 12) configurés pour mettre en œuvre :
un moyen de détermination de valeur de score (16, 74) permettant de déterminer une valeur de score de données d'entrée, la valeur de score des données d'entrée étant la valeur de score sortie par un modèle appris lorsque les données d'entrée sont entrées dans le modèle appris,
dans lequel le moyen de détermination de valeur de score est configuré pour déterminer une valeur de score respective pour chacun parmi un ou plusieurs éléments de données d'entrée non entrés pour l'apprentissage du modèle appris,
dans lequel le modèle appris est mis en œuvre par un processeur de l'un parmi le ou les ordinateurs et doit être utilisé pour générer des données de résultat d'estimation indiquant un résultat d'une estimation relative à de premières données d'entrée à estimer ;
un moyen de génération de données d'évaluation (18, 96) permettant de générer des données d'évaluation de la ou des valeurs de score déterminées, sur la base de données de résultat connues pour chacun parmi le ou les éléments de données d'entrée, dans lequel, pour chaque valeur de score donnée de la ou des valeurs de score déterminées, le moyen de génération de données d'évaluation est configuré pour générer des données indiquant une valeur représentative des données de résultat associées à chacun parmi le ou les éléments de données d'entrée déterminées comme ayant la valeur de score donnée, en tant que données d'évaluation de la valeur de score ; et
un moyen d'estimation (12, 50) permettant de générer des données de résultat d'estimation indiquant un résultat de l'estimation relative aux premières données d'entrée, sur la base d'une première valeur de score sortie par le modèle appris lorsque les premières données d'entrée sont entrées dans le modèle appris, et des données d'évaluation ; dans lequel le moyen d'estimation est configuré pour générer les données de résultat d'estimation relatives aux premières données d'entrée, sur la base de la première valeur de score, et de la valeur représentative indiquée par les données d'évaluation de la première valeur de score ; dans lequel les données de résultat d'estimation relatives aux premières données d'entrée comportent la valeur représentative indiquée par les données d'évaluation de la première valeur de score.

2. Système d'estimation (1) selon la revendication 1, comprenant en outre un dispositif de commande d'affichage (12, 56) configuré pour afficher des informations sur les premières données d'entrée dans un mode correspondant à une valeur des données de résultat d'estimation relatives aux premières données d'entrée.

3. Système d'estimation (1) selon la revendication 2, dans lequel le dispositif de commande d'affichage (12, 56) est configuré pour afficher des informations sur les premières données d'entrée dans un mode correspondant à un niveau auquel appartiennent les premières données d'entrée, le niveau étant déterminé parmi une pluralité de niveaux sur la base d'une valeur des données de résultat d'estimation relatives aux premières données d'entrée.

4. Procédé d'estimation mis en oeuvre par ordinateur, comprenant les étapes consistant à :
déterminer (S106) une valeur de score de données d'entrée, la valeur de score des données d'entrée étant la valeur de score sortie par un modèle appris lorsque les données d'entrée sont entrées dans le modèle appris,
dans lequel un score respectif est déterminé pour chacun parmi un ou plusieurs éléments de données d'entrée non entrés pour l'apprentissage du modèle appris,
dans lequel le modèle appris est mis en oeuvre par ordinateur et doit être utilisé pour générer des données de résultat d'estimation indiquant un résultat d'une estimation relative aux premières données d'entrée à estimer ;
générer des données d'évaluation de la ou des valeurs de score déterminées sur la base de données de résultat connues pour chacun parmi le ou les éléments de données d'entrée, dans lequel, pour chaque valeur de score donnée parmi la ou les valeurs de score déterminées, la génération des données d'évaluation comprend la génération de données indiquant une valeur représentative des données de résultat associées à chacun parmi le ou les éléments de données d'entrée déterminées comme ayant la valeur de score donnée, en tant que données d'évaluation de la valeur de score ; et
générer des données de résultat d'estimation (S109) indiquant un résultat de l'estimation relative aux premières données d'entrée, sur la base d'une première valeur de score sortie par le modèle appris lorsque les premières données d'entrée sont entrées dans le modèle appris, et des données d'évaluation ; dans lequel les données de résultat d'estimation relatives aux premières données d'entrée sont générées sur la base de la première valeur de score et de la valeur représentative indiquée par les données d'évaluation de la première valeur de score ; dans lequel les données de résultat d'estimation relatives aux premières données d'entrée comportent la valeur représentative indiquée par les données d'évaluation de la première valeur de score.

5. Support de stockage lisible par ordinateur sur lequel est stocké un programme permettant d'amener un ordinateur (16, 18, 12) à exécuter les procédures consistant à :
déterminer (S106) une valeur de score de données d'entrée, la valeur de score des données d'entrée étant la valeur de score sortie par un modèle appris lorsque les données d'entrée sont entrées dans le modèle appris,
dans lequel un score respectif est déterminé pour chacun parmi un ou plusieurs éléments de données d'entrée non entrés pour l'apprentissage du modèle appris,
dans lequel le modèle appris est mis en oeuvre par ordinateur et doit être utilisé pour générer des données de résultat d'estimation indiquant un résultat d'une estimation relative aux premières données d'entrée à estimer ;
générer des données d'évaluation de la ou des valeurs de score déterminées sur la base de données de résultat connues pour chacun parmi le ou les éléments de données d'entrée, dans lequel, pour chaque valeur de score donnée parmi la ou les valeurs de score déterminées, la génération des données d'évaluation comprend la génération de données indiquant une valeur représentative des données de résultat associées à chacun parmi le ou les éléments de données d'entrée déterminées comme ayant la valeur de score donnée, en tant que données d'évaluation de la valeur de score ; et
générer (S109) des données de résultat d'estimation indiquant un résultat de l'estimation relative aux premières données d'entrée, sur la base d'une première valeur de score sortie par le modèle appris lorsque les premières données d'entrée sont entrées dans le modèle appris, et des données d'évaluation ; dans lequel les données de résultat d'estimation relatives aux premières données d'entrée sont générées sur la base de la première valeur de score et de la valeur représentative indiquée par les données d'évaluation de la première valeur de score ; dans lequel les données de résultat d'estimation relatives aux premières données d'entrée comportent la valeur représentative indiquée par les données d'évaluation de la première valeur de score.
